# EUROPEAN PATENT APPLICATION

(11) **EP 2 871 901 A1**
(43) Date of publication of application: **13.05.2015**
(21) Application number: 14187239.0
(22) Date of filing: 01.10.2014
(51) Int. Cl.: H04W 74/02

(54) **Methods and apparatus for wireless networking**

(30) Priority: 07.11.2013 US 201314074048
(71) Applicant: Nokia Corporation, 02610 Espoo (FI)
(72) Inventor: Doppler, Klaus, Albany, CA 94706 (US); Choudhury, Sayantan, Berkeley, CA 94709 (US)
(74) Representative: Nokia Corporation

(57) **Abstract**

Systems and techniques for management of wireless network transmission. A high efficiency wireless network that can operate using a contention free period defines an interframe space that is shorter than the interframe space used in legacy networks, so that a legacy network will be unable to contend for the medium if the high efficiency wireless network transmits during the contention free period. Before the contention free period begins, a high efficiency network element examines a transmission medium, and if an ongoing transmission extends into the contention free period, transmission by the high efficiency network is delayed until the end of the ongoing transmission. The high efficiency wireless network uses an interframe space sufficiently short that a legacy network cannot contend for the medium. After the contention free period, the high efficiency network uses an interframe space value on the order of that used by the legacy network.

## Description

### TECHNICAL FIELD:

The present invention relates generally to wireless communication. More particularly, the invention relates to improved systems and techniques for use of contention free periods in wireless local area networking.

### BACKGROUND:

Wireless networking has become more and more popular in recent years. Wireless deployments allow users convenience in choosing their location, and free movement within the area of service, without a need to find or connect to a wired outlet. In addition, users can enter or leave an area of service without any need to physically connect or disconnect.

Because of the popularity of wireless networking and the ease of setting up wireless networks (in addition to the sensitivity of much of the information that is carried by such networks, independently operated networks proliferate in many locations, with many independent networks operating in close proximity to one another. Network access points come in all varieties, operating at different power levels and having different ranges, and they all must share available radio resources. In any but sparsely populated areas, significant numbers of access points and client devices may be expected to be within range of one another, and standards for wireless networking operation provide mechanisms for orderly sharing of frequency resources.

### SUMMARY:

In one embodiment of the invention, an apparatus comprises at least one processor and memory storing a program of instructions. The memory storing the program of instructions is configured to, with the at least one processor, cause the apparatus to at least, before the beginning of a priority period, examine a transmission medium for an ongoing transmission from a second apparatus and, in response to detection of an ongoing transmission extending past the scheduled beginning of the priority period, wait for the fulfillment of a specified criterion indicating an end of the ongoing transmission. In response to fulfillment of the specified criterion, transmission of a first data frame is scheduled followed by a first interframe space value during the priority period. During a non-priority period, transmission of a first data frame is scheduled after an ongoing transmission followed by a second interframe space value, wherein the second interframe space value is greater than the first interframe space value.

In another embodiment of the invention, a method comprises, before the beginning of a priority period, examining a transmission medium for an ongoing transmission and, in response to detection of an ongoing transmission from a second apparatus extending past the scheduled beginning of the priority period, waiting for the fulfillment of a specified criterion indicating an end of the ongoing transmission. In response to fulfillment of the specified criterion, transmission of a first data frame is scheduled, followed by a first interframe space value during the priority period. During a non-priority period, transmission of a first data frame is scheduled, followed by a second interframe space value, wherein the second interframe space value is greater than the first interframe space value.

In another embodiment of the invention, a computer readable medium stores a program of instructions, execution of which by a processor configures an apparatus to at least, before the beginning of a priority period, examine a transmission medium for an ongoing transmission from a second apparatus and, in response to detection of an ongoing transmission extending past the scheduled beginning of the priority period, wait for the fulfillment of a specified criterion indicating an end of the ongoing transmission. In response to fulfillment of the specified criterion, transmission of a first data frame is scheduled, followed by a first interframe space value during the priority period. During a non-priority period, transmission of a first data frame is scheduled, followed by a second interframe space value, wherein the second interframe space value is greater than the first interframe space value.

### BRIEF DESCRIPTION OF THE DRAWINGS:

Fig. 1 illustrates a network environment according to an embodiment of the present invention;
Fig. 2 illustrates a signaling diagram according to an embodiment of the present invention;
Fig. 3 illustrates a process according to an embodiment of the present invention; and
Fig. 4 illustrates elements used in carrying out one or more embodiments of the present invention.

### DETAILED DESCRIPTION:

Embodiments of the present invention recognize that development of new network technologies is generally achieved in an incremental fashion, leading to a need for networks, systems, and devices developed using newer technologies or following newer standards to coexist with existing legacy networks, systems, and devices using older technologies or following an older standard. One need for coexistence that has been recognized is the need for priority or contention free transmission to coexist with existing networks that use contention based transmission at least part of the time.

One particular exemplary embodiment addresses coexistence of networks using a contention free period with legacy wireless networks operating under various divisions of the 802.11 standard, at least some of which do not recognize contention free periods. At least some such networks use Carrier Sense Multiple Access, and this limits the number of concurrent transmissions that can take place in a dense deployment. Embodiments of the invention further recognize that widespread, organized changes to networks deployments are virtually impossible, because networks are generally implemented by individuals or small groups to meet their own needs and changes to existing deployments will occur only incrementally as network owners perceive that new implementations will better meet their needs. It is recognized, therefore, that new mechanisms for wireless networking may need to be compatible with existing mechanisms.

In one or more embodiments therefore, the present invention addresses mechanisms to be used in deployments of high efficiency wireless LAN (HEW) networks so that such HEW networks will be compatible with existing WLAN operating under earlier 802.11 standards. As currently being developed, HEW may use periodic priority periods, such as contention free (CF) periods, to increase wireless medium utilization. At other times, the HEW networks may use non-priority periods, such as contention periods, to allow legacy networks to compete for the medium. In another embodiment, HEW may use also CF operation in non-priority periods but may contend for the wireless medium for the first transmission with lower priority compared to legacy networks. In another embodiment, operations defined by cellular network standards, such as, for example, third generation partnership project (3GPP) standards, 3GPP long term evolution (LTE) and 3GPP LTE-Advanced (LTE-A) standards may be used instead of HEW.

Legacy WLAN elements typically do not support contention free periods but instead contend for resources. HEW networks control access to the contention free period while managing transmission during the contention free period so that legacy transmissions can finish without collision. HEW transmissions during the contention free period use a short enough time before the first frame to be transmitted in the contention free period so that legacy networks, which do not use a contention free period but which impose a longer time after the end of the most recent transmission to begin a new transmission than the typical HEW network. Therefore, once the HEW network has begun contention free transmission, a legacy network will not attempt to transmit. Prior art techniques such as simply starting contention free periods without using carrier sensing cause a risk of collision between the first packet and packets transmitted by legacy networks. In order to keep delays short, the contention free periods are likely to be short with only a limited number of packets, such as, for example, 10, packets being transmitted, so that loss of the first packet will cause significant delays, because there is no time within the contention free period to recover from the collision. Collisions will also significantly reduce the efficiency of the network operation.

Therefore, one or more embodiments of the invention provide for contention periods followed by contention free periods, so as to enable coexistence with legacy systems. The behavior of access points (APs) and stations (STAs) is managed so that transmission during a contention free period is delayed until after transmission by a legacy device that overlaps into the contention free period. Contention and contention-free periods are of short duration, for example 1-5ms. Operation of HEW APs and STAs at the boundary of the contention and contention free period is defined so as to avoid significant packet loss at the boundary areas due to activity of legacy WLAN systems.

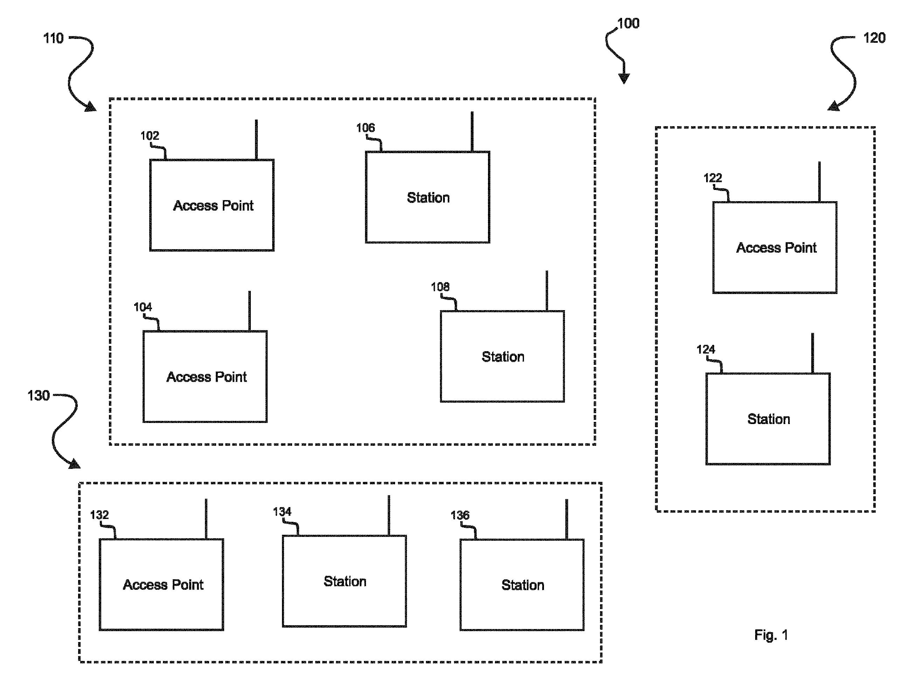

Fig. 1 illustrates an environment 100, showing coexistence of a high efficiency wireless LAN network according to one or more embodiments of the present invention with legacy networks. The high efficiency wireless LAN network (HEW) is 110, comprising HEW APs 102 and 104, and HEW STAs 106 and 108. Other networks 120, comprising AP 122 and STA 124, and 130, comprising AP 132 and STAs 134 and 136, are operating in the vicinity of the network 100. The networks 120 and 130 are legacy networks, while the HEW network 110 uses mechanisms according to one or more embodiments of the present invention to avoid interference and packet loss due to coexistence with such legacy networks.

In one or more embodiments of the invention, an HEW element monitors the medium for a predetermined time before the beginning of the contention free period (for example 1ms). If a transmission is detected, the HEW element will wait for the transmission (including any acknowledgements, or ACKs) to finish before attempting to transmit. If a PHY header is present, the HEW element will make sure the header can be decoded correctly, so as to anticipate the prospect of a repeat transmission by the legacy device. The HEW element will then use a short inter-frame space value during the contention free period so that the contention mechanisms of legacy systems will not allow them to contend for the resources. After the end of the contention free period, the HEW will then use a longer inter-frame space value, allowing for normal contention by legacy networks.

In another example, an HEW element may use a short inter-frame spacing for the first data frame, and then use no interframe spacing. It will also be noted that embodiments of the invention may use interframe spacing values appropriate to design needs, without being bound to the use of SIFS or RIFS values as defined in the current 802.11 standard. For example, networks according to the present invention may use interframe spacing values shorter than standard SIFS and RIFS values.

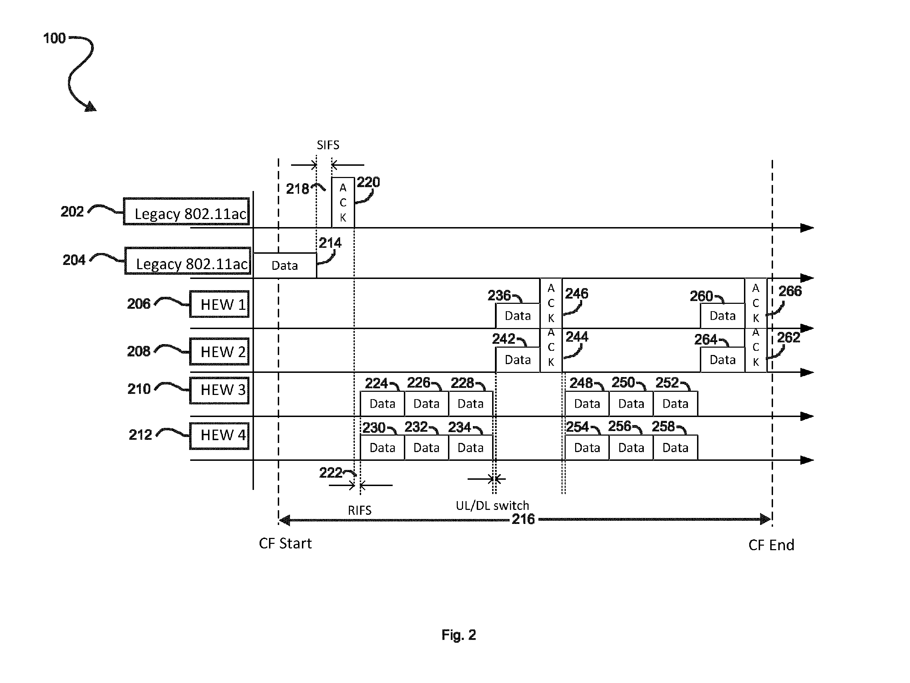

Fig. 2 is a signaling diagram illustrating transmission sequencing by HEW elements such as those illustrated in Fig. 1, illustrating the operation of a legacy AP 202 and STA 204 and HEW STAs 206 and 208, and HEW APs 210 and 212. An HEW access point may be able to coordinate all transmissions within the basic service set (BSS) and allocate downlink (DL) and uplink (UL) slots to stations, although it will be recognized that alternative or additional embodiments of the invention may provide for periods in which stations may use random access procedures. The slot timings in the illustrated example are with respect to the first transmission after the contention free period begins.

In an environment densely populated with wireless network elements, all HEW elements (in this case the STAs 206, 208 and APs 210 and 212), will likely detect the legacy transmission (in this case by the STA 204), and may also (given that they are in close proximity to one another) begin the contention free period at the same time as one another. Such detection by all elements naturally synchronizes all HEW basic service sets in the environment, so that the HEW BSSs might have coordinated uplink and downlink periods. The synchronization mechanism can be used to enable multi-user multiple-input-multiple-output (MIMO) in the uplink period.

Switching between UL and DL requires only sufficient time to allow the hardware to switch from UL to DL and vice versa. In many cases, then, it is not necessary to allocate short interframe space (SIFS) periods. However, because decoding of the frame might take longer than the UL/DL switch time, a station might transmit UL data first, followed by the ACK of the downlink packet.

The AP 204, then, is detected to be transmitting data frame 214, with the transmission beginning before the start of the CF period 216 and continuing into the CF period. The data frame 214 is followed by an SIFS 218 (of the same duration as is typical among conventional WLAN networks. The STA 202 responds with an ACK 220. The HEW elements 206, 208, 210, and 212 all coordinate the beginning of the CF period 216 and also detect the transmission of data frame 214 by the STA 204 and the ACK 220 by the STA 202. The transmission of data frame 214 is seen by the HEW elements as an ongoing transmission, and these elements wait until a prescribed criterion is met (for example, as here, the end of the transmission 214 and an ACK 220, although it may be recognized that other criteria may be used, such as recognition of a request to send (RTS) or clear to send (CTS) command.

In the present example, after the transmission 214 and the ACK 220, and also after an interframe space 222, which may be a reduced interframe space (RIFS) or may use a different interframe space value according to design choice (which may be, for example a consistent spacing value for the network design), the HEW AP 210 transmits data frames 224, 226, and 228 and the HEW AP 212 transmits data frames 230, 232, and 234. An uplink/downlink switch is performed, with the switch being based, for example, on a coordinated configuration among all of the HEW elements that switching between uplink and downlink will be performed after a specified number of data packets, a specified time interval, or some other suitable event or condition. Transmission of data may continue, with the HEW STA 206 transmitting the data frame 236 and the HEW STA 208 transmitting the data frame 242, with the STA 208 and STA 206 transmitting ACKs 244 and 246, respectively. The CF period 216 continues, with data frames 248, 250, and 252 and data frames 254, 256, and 258 being transmitted by the HEW APs 210 and 212, respectively, and the HEW STAs 206 and 208 respectively transmitting data frames 260 and ACK 266, and data frame 264 and ACK 262.

Transmission during the CF period 216 is delayed so as to avoid collision with the data frame 214, but once transmission starts, intervals between data frames and ACKS, and for operations such as uplink/downlink switching, are specified so as to prevent legacy devices from successfully contending for the resources. Thus, an HEW network according to one or more embodiments of the invention provides for a contention free period by managing intervals between transmissions, while also delaying an initial transmission during the contention free period so as to avoid collisions.

The contention free period may be implemented in a number of alternative ways. For example, a fixed frame structure with a fixed duration of the contention free period may be used. That is, if the start of the CF period is delayed, the end of the CF period is also delayed. In another alternative, a flexible frame structure may be used, allowing variability in the duration of the CF period. For example, if the beginning of the CF period is delayed to avoid collision with an ongoing legacy transmission, the end of the CF period may remain the same with the CF period being shortened.

As a further alternative, dedicated contention free periods may be used, that is, a CF period for uplink or a CF period for downlink followed by ACK. The UL and DL periods might, for example, be scheduled to accommodate uplink and downlink traffic, if the volumes of uplink and downlink traffic vary in a predictable way. There may also be downlink and uplink ACK periods, periods to send PS-Polls, periods to initiate a network association, and specified periods for carrying out needed operations.

In yet another alternative, each CF period might have both an uplink and a downlink phase, and this change in phase might be accomplished with or without a coordinated switching point between basic service sets, based on design choices.

If the PHY header of the ongoing legacy data packet transmission crossing the expected beginning of the CF period can be decoded, the packet length can be determined and the CF period can begin at a specified time after the packet transmission ends. If the PHY header cannot be decoded, the HEW station that is monitoring the medium may continue to sense the medium until the transmission ends. In one alternative of this approach, the CF period is delayed for an additional SIFS or reduced interframe space (RIFS) plus ACK duration. In another alternative of this approach, the CF period is delayed until the end of the data packet transmission plus an SIFS or RIFS.

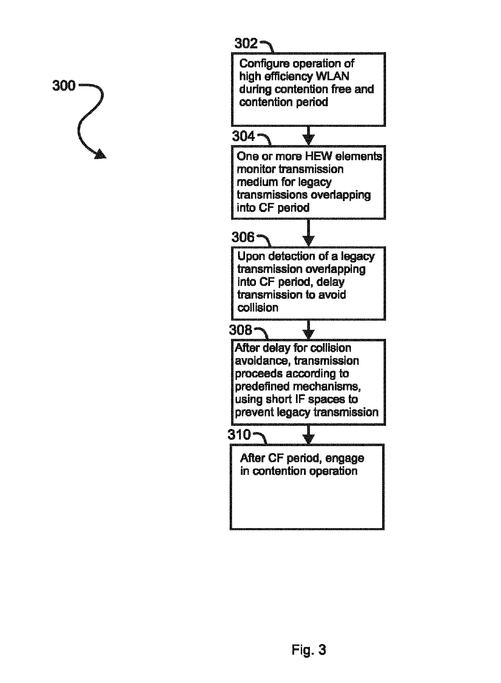

Fig. 3 illustrates a process 300 of wireless networking communication according to one or more embodiments of the present invention. The process 200 may suitably be carried out by a high efficiency wireless LAN (HEW) when the potential for operation in the vicinity of legacy WLANs is present.

At block 302, operation of a high efficiency WLAN network behavior during contention free period and a contention period is configured. Configuration of behavior during the contention free period may, for example, comprise defining detection, and behavior upon detection of, a transmission occurring during the contention free period, such as at the beginning of the period. Such configuration defines mechanisms for delaying transmission so as to avoid collision. Further configuration of behavior during the contention free period defines intervals between transmissions, frame structure, uplink and downlink behavior during the contention free period, such as whether the period is uplink only, downlink only, or with partitioned between uplink and downlink. Still further configuration may define behavior if a legacy data packet requires delay of transmission, but the data packet header cannot be decoded. Configuration may also define synchronization of HEW elements - for example, initiation and duration of contention free periods, and may also define behavior after contention free periods - such as an interframe space duration or contention window size during a contention period, allowing for contention by the HEW elements.

At block 304, upon the beginning of a scheduled contention free period, one or more HEW elements begin or continue to monitor the wireless transmission medium in which it operates for transmissions by legacy networking elements. At block 306, upon detection of a transmission that overlaps into the contention free period, one or more elements of the HEW delay transmission for a predefined period or until a specified event. At block 308, transmission proceeds according to predefined mechanisms, with, for example, transmission comprising only uplink or only downlink, or switching between uplink and downlink at a predefined point, with IF spaces being used that are short enough to prevent legacy transmissions. At block 310, at the end of the contention free period, the HEW elements perform conventional contention for resources, using an interframe period on the order of that used by legacy elements and providing for conventional contention with legacy elements.

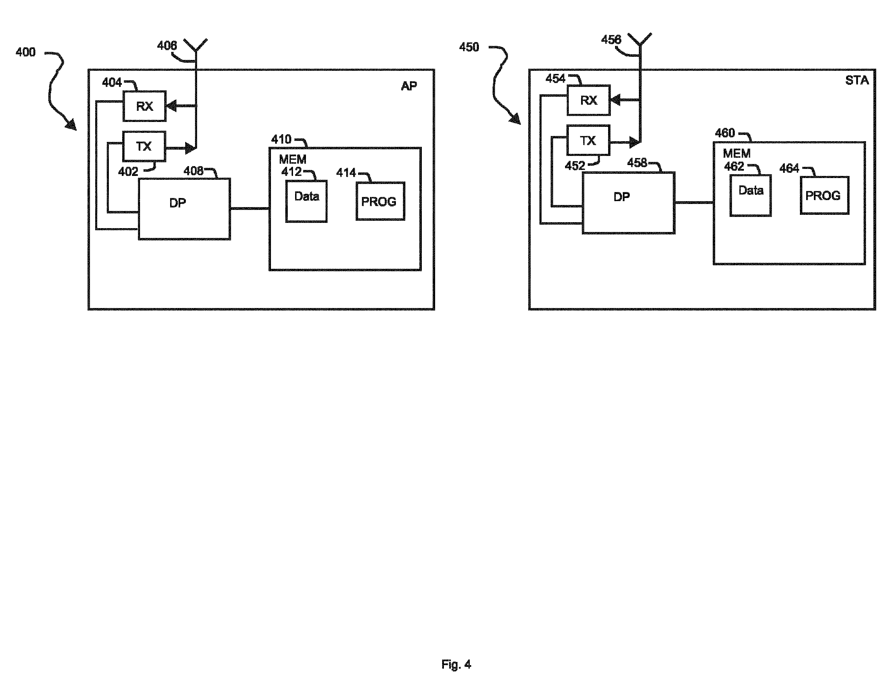

Fig. 4 illustrates details of an access point (AP) 400, and a client station (STA) 450. The AP 400 may suitably comprise a transmitter 402, receiver 404, and antenna 406. The AP 400 may also include a processor 408 and memory 410. The AP 400 may employ data 412 and at least one program (PROG) 414, residing in memory 410.

The STA 450 may suitably comprise a transmitter 452, receiver 454, and antenna 456. The STA 450 may also include a processor 458 and memory 460. The STA 450 may employ data 462 and at least one program (PROG) 464, residing in memory 460.

At least one of the PROGs 414 in the AP 400 is assumed to include a set of program instructions that, when executed by the associated DP 408, enable the device to operate in accordance with the exemplary embodiments of this invention, as detailed above. In these regards the exemplary embodiments of this invention may be implemented at least in part by computer software stored on the MEM 410, which is executable by the DP 408 of the AP 400, or by hardware, or by a combination of tangibly stored software and hardware (and tangibly stored firmware). Similarly, at least one of the PROGs 464 in the STA 450 is assumed to include a set of program instructions that, when executed by the associated DP 458, enable the device to operate in accordance with the exemplary embodiments of this invention, as detailed above. In these regards the exemplary embodiments of this invention may be implemented at least in part by computer software stored on the MEM 460, which is executable by the DP 458 of the STA 450, or by hardware, or by a combination of tangibly stored software and hardware (and tangibly stored firmware). Electronic devices implementing these aspects of the invention need not be the entire devices as depicted at Figure 1 or Fig. 4 or may be one or more components of same such as the above described tangibly stored software, hardware, firmware and DP, or a system on a chip SOC or an application specific integrated circuit ASIC.

In general, the various embodiments of the STA 450 can include, but are not limited to personal portable digital devices having wireless communication capabilities, including but not limited to cellular telephones, navigation devices, laptop/palmtop/tablet computers, digital cameras and music devices, and Internet appliances.

Various embodiments of the computer readable MEM 410 and 460 include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the DP 408 and 458 include but are not limited to general purpose computers, special purpose computers, microprocessors, digital signal processors (DSPs) and multi-core processors.

Electronic devices implementing these aspects of the invention need not be the entire devices as depicted at Figure 1 or Fig. 4 or may be one or more components of same such as the above described tangibly stored software, hardware, firmware and DP, or a system on a chip SOC or an application specific integrated circuit ASIC.

While various exemplary embodiments have been described above it should be appreciated that the practice of the invention is not limited to the exemplary embodiments shown and discussed here. Various modifications and adaptations to the foregoing exemplary embodiments of this invention may become apparent to those skilled in the relevant arts in view of the foregoing description. It will be further recognized that the various blocks illustrated in Fig. 3 and discussed above may be performed as steps, but the order in which they are presented is not limiting and they may be performed in any appropriate order with or without additional intervening blocks or steps.

Further, some of the various features of the above non-limiting embodiments may be used to advantage without the corresponding use of other described features.

The foregoing description should therefore be considered as merely illustrative of the principles, teachings and exemplary embodiments of this invention, and not in limitation thereof.

## Claims

1. An apparatus comprising:
at least one processor;
memory storing a program of instructions;
wherein the memory storing the program of instructions is configured to, with the at least one processor, cause the apparatus to at least:
before the beginning of a priority period, examine a transmission medium for an ongoing transmission;
in response to detection of an ongoing transmission from a second apparatus extending past the scheduled beginning of the priority period, wait for the fulfillment of a specified criterion indicating an end of the ongoing transmission;
in response to fulfillment of the specified criterion, schedule transmission of the first data frame, followed by a first interframe space value after the ongoing transmission; and
during a non-priority period, schedule transmission of the first data frame, followed by a second interframe space value, wherein the second interframe space value is greater than the first interframe space value.

2. The apparatus of claim 1, wherein the priority period is a contention free period for a wireless local area network and the non-priority period is a contention period for the wireless local area network, and the second interframe space value is on the order of or longer than a legacy interframe space value used by legacy wireless local area networking elements.

3. The apparatus of claim 1 or 2, wherein the priority period has a fixed frame structure such that delay of transmission based on the presence of an ongoing transmission shortens the time available for transmission during the priority period.

4. The apparatus of any preceding claim 1 to 3, wherein the priority period has a flexible frame structure such that delay of transmission extends the priority period.

5. The apparatus of any preceding claim 1 to 4, wherein the priority period is dedicated either to uplink or to downlink transmission.

6. The apparatus of any preceding claim 1 to 5, wherein the priority period has an uplink phase and a downlink phase with a transition between uplink and downlink occurring during the priority period.

7. The apparatus of any preceding claim 1 to 6, wherein the criterion indicating the end of the ongoing transmission comprises an acknowledgement following the end of the ongoing transmission or a duration indicated in a request to send or clear to send message.

8. A method comprising:
before the beginning of a priority period, examining a transmission medium for an ongoing transmission;
in response to detection of an ongoing transmission from a second apparatus extending past the scheduled beginning of the priority period, waiting for the fulfillment of a specified criterion indicating an end of the ongoing transmission;
in response to fulfillment of the specified criterion, scheduling transmission of the first data frame, followed by a first interframe space value after the ongoing transmission; and
during a non-priority period, scheduling transmission of the first data frame, follwed by a second interframe space value, wherein the second interframe space value is greater than the first interframe space value.

9. The method of claim 8, wherein the priority period is a contention free period for a wireless local area network and the non-priority period is a contention period for the wireless local area network, and the second interframe space value is on the order or longer than of a legacy interframe space value used by legacy wireless local area networking elements.

10. The method of claim 8 or 9, wherein the priority period has a fixed frame structure such that delay of transmission based on the presence of an ongoing transmission shortens the time available for transmission during the priority period.

11. The method of any preceding claim 8 to 10, wherein the priority period has a flexible frame structure such that delay of transmission extends the priority period.

12. The method of any preceding claim 8 to 11, wherein the priority period is dedicated either to uplink or to downlink transmission.

13. The method of any preceding claim 8 to 12, wherein the priority period has an uplink phase and a downlink phase with a transition between uplink and downlink occurring during the priority period.

14. The method of any preceding claim 8 to 13, wherein the criterion indicating the end of the ongoing transmission comprises an acknowledgement following the end of the ongoing transmission or a duration indicated in a request to send or clear to send message.

15. A computer readable medium storing a program of instructions, execution of which by a processor configures an apparatus to at least:
before the beginning of a priority period, examine a transmission medium for an ongoing transmission;
in response to detection of an ongoing transmission from a second apparatus extending past the scheduled beginning of the priority period, wait for the fulfillment of a specified criterion indicating an end of the ongoing transmission;
in response to fulfillment of the specified criterion, schedule transmission of the first data frame, followed by a first interframe space value after the ongoing transmission; and
during a non-priority period, schedule transmission of the first data frame, followed by a second interframe space value, wherein the second interframe space value is greater than the first interframe space value.
